**Europäisches Patentamt**

**European Patent Office**

**Office européen des brevets**

(19)

(11) **EP 1 382 984 A1**

(12) **EUROPEAN PATENT APPLICATION**

(43) Date of publication:
21.01.2004 Bulletin 2004/04

(51) Int Cl.$^7$: **G02B 6/35**

(21) Application number: 02360215.4

(22) Date of filing: 19.07.2002

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **Avanex Corporation**<br>**Fremont, CA 94538 (US)** | (72) Inventor: **Blau, Gerd**<br>**70435 Stuttgart (DE)**<br><br>(74) Representative: **Haines, Miles John et al**<br>**D. Young & Co.**<br>**21 New Fetter Lane**<br>**London EC4A 1DA (GB)** |

(54) **Planar Optical Switch and Switch Array**

(57)     A planar optical switch (10) comprises a first planar optical waveguide (12) and a second planar optical waveguide (14) that is arranged in the plane of and inclined to the first optical waveguide (12). A coupling element, preferably a prism (26), is provided that is made of a refractive material. The coupling element (26) is movably (32) arranged between a coupling position and a non-coupling position. The coupling element has a first (28) and a second (30) surface that, if the coupling element (26) is in the coupling position, face a lateral surface (46) the first optical waveguide (12) and a lateral surface (48) of the second optical waveguide (14), respectively, in such a way that a substantial fraction of radiation guided in the first optical waveguide (12) is coupled via the coupling element (26) into the second optical waveguide (14) (Fig. 1).

Fig. 1

Fig. 3

**Description**

The present invention relates to a planar optical switch comprising a first planar optical waveguide and a second planar optical waveguide that is arranged in the plane of and inclined to the first optical waveguide. The invention further relates to an optical switch array comprising such an optical switch.

Optical switches and switch arrays of this kind are generally known in the art, for example from US-B1-6 195 478.

Optical switches are essential components in optical communication networks for determining and controlling the path along which optical signals propagate. An optical switch has N input ports and M output ports and allows to selectively route an optical signal fed into one of the N input ports to any one of the M output ports without the need of an electrical conversion of the optical signal. Optical switches are usually controlled by electrical switching signals that are generated, for example, by a network management system.

In future large-scale optical communication networks optical cross connects (OXC) will be key components that require optical switches with larger numbers of input and output ports. Such larger switches, for example 64x64 switches having 64 input ports and 64 output ports, are usually designed as two-dimensional arrays of smaller optical switches. Typically, such N×M switch arrays consist of N times M 2x2 switches.

Generally, properties such as switching time, crosstalk, long-term reliability and insertion loss are important design aspects of optical switches. Particularly in large optical switch arrays the issue of insertion losses is of major concern. This is due to the fact that an optical signal launched into an input port propagates through a considerable number of 2x2 switches so that the insertion losses of all 2x2 switches cumulate. For example, an optical signal fed into a 64x64 switch array has to travel through up to 127 2x2 switches. Even if only 1% of the signal is absorbed in each 2x2 switch, the overall loss can be as high as $(1-(1-1\%)^{127}) = 72\%$.

Not only the absolute value of the insertion loss, but also insertion loss uniformity is an important performance-related aspect that has to be taken into account when designing switches for large-scale switch arrays. Insertion loss uniformity is defined as the difference between the maximum and the minimum insertion loss that may occur in the switch at all conceivable switching positions that each correspond to a particular port to port connection. For example, a switch array having in the majority of switching positions small insertion losses and only in very few positions high insertion losses may be less desirably for many applications than a switch that has higher insertion losses at average, but in which the insertion loss is almost the same for all possible switch positions.

The non-uniformity of insertion loss in switch arrays is caused by the unequally distributed number of switches that are passed by optical signals at the various possible port-to-port connections. Each switch within the switch array has a position dependent insertion loss which contributes to the overall insertion loss of the switch array. To be more specific, 1x2 or 2x2 switches have a first and a second switch position that are usually referred to as the bar state and the cross state, respectively. In the bar state of the switch, an input signal is not (substantially) deviated from its propagation direction when traveling through the switch. In the cross state, the propagation direction of input light is altered by means of, for example, total internal reflection or reflective elements such as mirrors. In typical NxM switch array configurations, exactly one switch is in the cross state for all conceivable switching positions. The switching positions differ only with respect to the number of switches in the bar state through which an optical signal has to propagate. This means that in switch arrays overall insertion loss and also the insertion loss uniformity is mainly determined by the insertion loss of the constituting switches in the bar state. Consequently, 1x2 or 2x2 switches for switch arrays are desirable that have a particularly low insertion loss in the bar state.

From US-D1-6 195 478 that has already been mentioned at the outset, a planar switching element is known that includes two intersecting planar optical waveguides extending along a substrate. At the crosspoint of the waveguides a trench is formed that separates each waveguide into two parts. A displaceable device, for example a mirror, is received in the trench. If the device is in a transmitting position (bar state of the switch), for example completely outside the trench, an optical signal propagating in one of the two waveguides is only impeded by the trench that may be filled with a refractive index matching liquid. If the device is moved into a reflecting position (cross state), light that propagates in one waveguide and enters the trench is reflected by the device such that it enters the other waveguide on the same side of the trench. A microelectromechanical system (MEMS) is used for displacing the device between the transmitting position and the reflecting position.

Since light is, in the bar state of this known switch, not guided by total internal reflection when traversing the trench, significant losses due to diffraction are inevitable.

From US-A-5 699 462 a similar design is known in which the displaceable device is replaced by a gas bubble within a fluid that fills the trench. The fluid has a refractive index that substantially matches the refractive index of the core material of the waveguides. The bubble can be displaced within the trench by the application of heat generated by two microheaters. If the bubble is moved to the crosspoint of the waveguides, light propagating in one of the waveguides and entering the trench will encounter a refractive index mismatch upon reaching the trench. It is diverted back into the other waveguide on the same side of the trench as a result of total internal reflection that is achieved by an appropriate choice of the angle between the waveguides and the trench.

This known design has the same drawback with respect to the issue of insertion losses, namely that, in the bar state, light is not guided within an optical waveguide.

It is therefore an object of the present invention to provide an optical switch as mentioned at the outset that has small insertion losses particularly in the bar state.

This object is achieved, with an optical switch as mentioned at the outset, in that the optical switch comprises a coupling element made of a refractive material that is movably arranged between a coupling position and a non-coupling position and has a first and a second surface that, if the coupling element is in the coupling position, face a lateral surface of the first optical waveguide and a lateral surface of the second optical waveguide, respectively, in such a way that a substantial fraction of radiation guided in the first optical waveguide is coupled via the coupling element into the second optical waveguide.

This completely new switch concept allows to design 1x2 switches without any waveguide intersections at all. Such a 1x2 switch has thus a bar state in which an optical signal can propagate from an input or to an output port completely unimpeded by intersections, trenches or similar obstacles that could contribute to significant optical losses.

If the new switch concept is applied to a 2x2 switch, the first optical waveguide intersects the second optical waveguide. However, no trench is required at the crosspoint of the two waveguides. Due to the intersection, only the lateral confinement is slightly reduced in the waveguides at their crosspoint. Thus the insertion loss in the bar state is only marginally higher in a 2x2 configuration when compared to the insertion loss in a 1x2 configuration.

Thus switch arrays that utilize the new switches according to the invention as building blocks will not only have a very small average value of the insertion loss in all conceivable switching positions, but also display an almost uniform insertion loss behavior for different switching positions.

Effective coupling of optical signals from the first waveguide into the second waveguide through the evanescent field can be achieved by carefully choosing geometric and optical parameters of the switch. Since in most cases the refractive indexes of the optical waveguides are determined by the manufacturing process and other considerations such as dispersion and loss properties, it will in general be the geometric parameters that are varied if the coupling ratio between the optical waveguides shall be optimized. Among the geometric parameters are the mutual orientation of the two optical waveguides (i.e. intersection angle), the coupling length and the distance between the coupling element and the optical waveguides.

The optical waveguides do not have necessarily to be (completely) straight. However, it is generally preferred if the first and the second optical waveguides are straight such that an angle $\alpha$ is formed between the waveguides, and if the coupling element is a prism, wherein the first and the second surface of the prism are plane and define a prism angle $\gamma$ that substantially equals the angle $\alpha$.

Straight optical waveguides have the advantage of minimal insertion losses and significantly simplify design calculations of the new switch. Using a prism as coupling element having a prism angle $\gamma$ that substantially equals the angle between the two waveguides results in a parallel orientation between the first and the second surface of the prism with respect to the lateral surfaces of the first and the second optical waveguide, respectively. Such a parallel orientation significantly enhances an effective coupling of radiation between the first and the second waveguide.

For moving the coupling element between the coupling position and the non-coupling position any known kind of actuator or even a lever for manual manipulation can be provided. However, it is particularly preferred if the actuator is realized as a micromechanical structure formed, together with the coupling element, as one monolithic block of micromachined material, particularly of silicon or silicon on insulator. Such microelectromechanical structures, as are known in the art as such, are particularly suited for moving the coupling element between the coupling position and the non-coupling position because of their small size, low power consumption and fast switching response. Since, in this advantageous embodiment, the actuator is formed as one monolithic block with the coupling element, the new optical switch may be assembled from very few components which results in low manufacturing costs. In addition, the reduction of different components leads to an increased long-term reliability of the new switch.

In principle, the coupling element may contact the lateral surfaces of the first and the second waveguides with its first and second surface. However, it has been found out that a more efficient coupling between the first and the second waveguide via the coupling element can be achieved if the first and the second surface is spaced apart from the lateral surfaces of the first and second optical waveguide, respectively, so as to form a gap of width d that is increased during movement of the coupling element from the coupling position to the non-coupling position.

This gap may be filled by air or, more preferably, by an index matching liquid so as to achieve even better coupling properties when the coupling element is in the coupling position.

In order to ensure a precise and reliable movement of the coupling element between the coupling position and the non-coupling position, it is preferred if this movement is guided by at least one stop structure.

Such a stop structure may, for example, be etched into a silica structure containing the waveguide cores. The provision of stop structures allows to use cheaper actuators that do not ensure precise movements of the coupling element without further assistance.

It is understood that the features mentioned above and those yet to be explained below can be used not only in the respective combinations indicated, but also in other combinations or in isolation, without leaving the context of the present invention.

The above and other advantages and features of the present invention will become apparent the following description of preferred embodiments given in conjunction with the accompanying drawings, in which:

Fig. 1     is a simplified representation (not to scale) of a top view of a 2x2 optical switch according to the invention, shown in the bar state;

Fig. 2     is a side sectional view along II-II of the optical switch shown in Fig. 1;

Fig. 3     is a simplified representation (not to scale) of a top view of the optical switch of Fig. 1, shown in the cross state;

Fig. 4     is a side sectional view along IV-IV of the optical switch shown in Fig. 3;

Fig. 5     is a simplified representation (not to scale) of a top view of a 1x2 optical switch according to the invention, shown in the bar state;

Fig. 6     is a simplified representation (not to scale) of a top view of a switch array consisting of 16 optical switches as shown in Figs. 1 to 4.

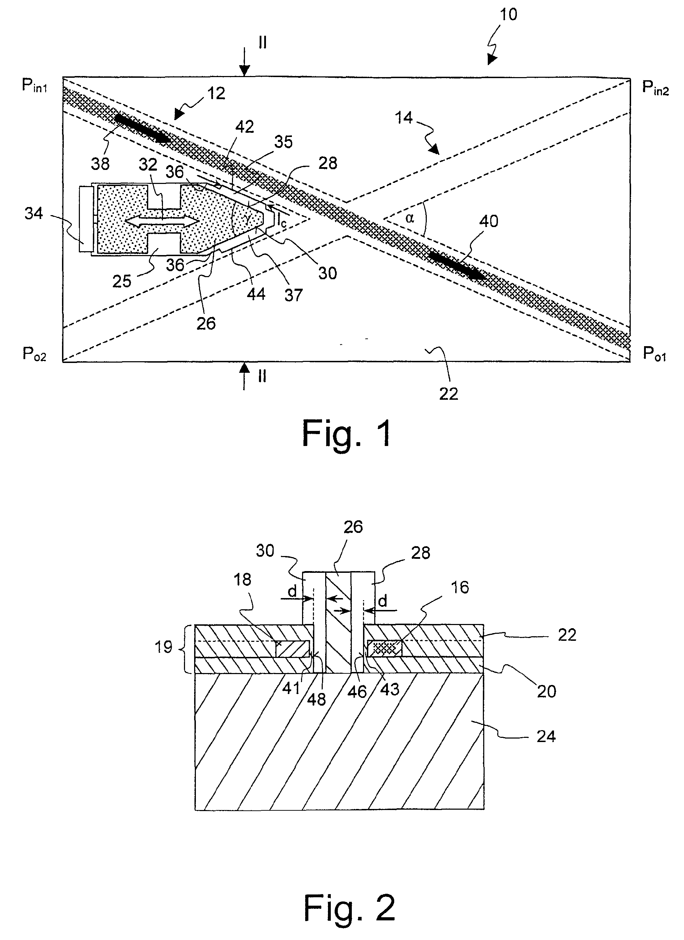

Figs. 1 and 2 show an optical switch in accordance with the invention in a simplified top view and a side sectional view along II-II, respectively, in the bar state. The optical switch is designated in its entirety by 10 and comprises a first straight optical waveguide 12 and a second straight optical waveguide 14 that is arranged in the plane of and inclined to first optical waveguide 12 so that both optical waveguides 12 and 14 intersect with an intersection angle $\alpha \leq 90°$. Opposite ends of first optical waveguide 12 define a first input port $P_{in1}$ and a first output port $P_{o1}$, and opposite ends of second optical waveguide 14 define a second input port $P_{in2}$ and second output port $P_{o2}$.

As can be seen best in the sectional view of Fig. 2, first optical waveguide 12 and second optical waveguide 14 have a first waveguide core 16 and a second waveguide core 18, respectively. Both waveguide cores 16 and 18 are embedded in a sandwiched structure 19 that comprises a buffer layer 20 and a cladding layer 22 deposited thereon so as to form a buried planar waveguide configuration. The sandwiched structure is supported by a substrate 24 that can be made of, for example, silicon, quartz or glass.

Waveguides 12 and 14 may be formed from a wide variety of materials chosen to provide the desired optical properties. While it is preferred to construct optical switch 10 on a silica based ($SiO_2$,) platform, other dielectrics or semiconductors that provide the desired optical properties may also be used, for example $SiO_xN_y$ or polymer platforms.

First and second waveguide cores 16 and 18 have a rectangular or particularly a square cross section. The confinement of optical radiation within waveguide cores 16 and 18 is mainly determined by the wavelength of the optical radiation, the geometry of the waveguide cores and the difference between the refractive indexes of the waveguide cores on the one hand and the surrounding material on the other hand. Since this waveguide configuration as such is conventional, it will not be described in further detail.

Switch 10 further comprises a recess 25 that is provided in sandwiched structure 19 and may extend down to buffer layer 20 or, as in the embodiment shown, down even deeper up to the surface of substrate 24. Recess 25 has a rectangular and a prismatic part, the latter comprising a first lateral indentation 42 and, on the opposite side, a second indentation 44 that is arranged symmetrical to first indentation 42. A first and a second thin vertical strip 41 and 43 of buffer layer 20 remain between indentations 42 and 44 on the one hand and waveguide cores 16 and 18 on the other hand. Strips 41 and 43 have surfaces 46 and 48 that face indentations 42 and 44 and are thus lateral surfaces of optical waveguides 12 and 14. In the embodiment shown, recess 25 is formed by an etching process in which the corresponding parts of buffer layer 20 and cladding layer 22 are removed after deposition of those layers on substrate 24.

Recess 25 receives a prism 26 that has a first lateral surface 28 and a second lateral surface 30. First and second surfaces 28 and 30, respectively, are plane and define a prism angle $\gamma$ that substantially equals intersection angle $\alpha$. Prism 26 is received in recess 25 in a displaceable manner so that it can be translationally moved, in a plane defined by optical waveguides 12 and 14, in a direction indicated by arrow 32. To this end an actuator 34 is schematically indicated which is connected to prism 26. The actuator may be a formed as a microelectromechanical structure (MEMS). Particularly suited is an electrostatic comb drive as is known as such in the art, for example from WO-A1-01/57578. Movement of prism 26 is guided and confined by stop structures 36 that are formed by the etching process.

In the bar state shown in Figs. 1 and 2, prism 26 is retracted by actuator 34 to a non-coupling position. In this position first and second surfaces 28 and 30 of prism 26 are, in the area of indentations 42 and 44, spaced apart from first and second optical waveguide 12 and 14 so as to form gaps 35 and 37, respectively, of widths d as indicated in the sectional view of Fig. 2. It can be seen in Fig. 1 that width d of gaps 35 and 37 is uniform across the length of first and second indentations 42 and 44.

In the bar state shown in Figs. 1 and 2, prism 26 is retracted and width d of first and second gap 35 and 37 has its maximum value. Optical signals propagating in first optical waveguide 12 cannot couple - at least to a substantial amount - into second waveguide 14. Instead, such signals propagate almost unimpeded through optical waveguide 12 to first output port $P_{o1}$ as indicated by arrows 38 and 40 in Fig. 1. The propagation of optical signals in first optical waveguide 12 may be slightly perturbed only at two locations, namely in the area of first and second strips 41 and 43, and at the crosspoint of optical waveguides 12 and 14. Due to the symmetry of switch 10, also optical signals launched into second input port $P_{in2}$ will barely be perturbed when propagating to second output port $P_{o2}$ in the bar state.

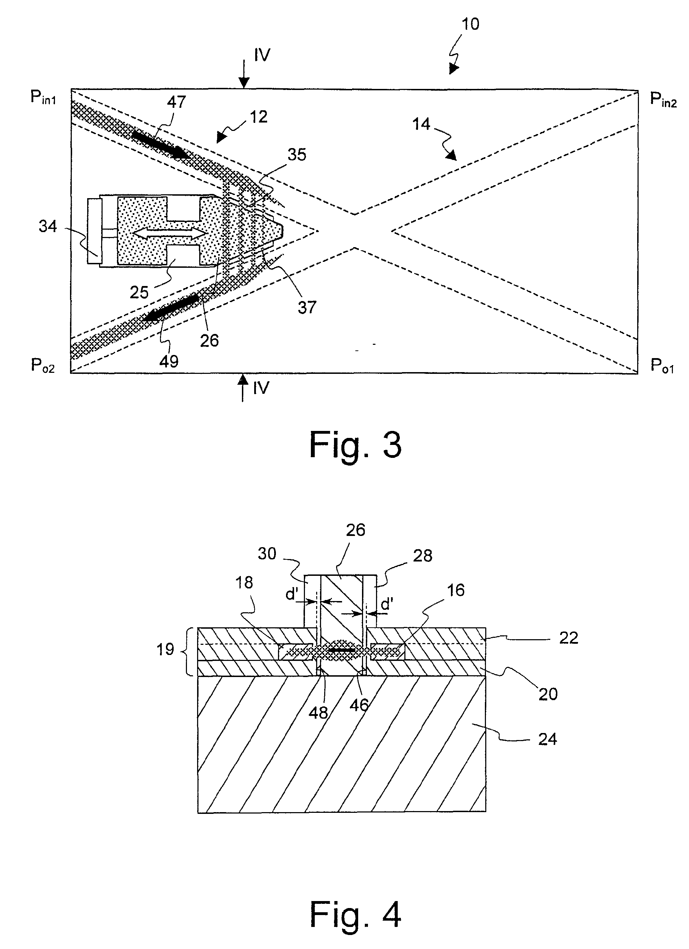

If, however, upon operation of actuator 34 prism 26 is displaced from its non-coupling position shown in Figs. 1 and 2 to its coupling position shown in Figs. 3 and 4, width d of gaps 35 and 37 decreases to such an extent that optical signals propagating in first optical waveguide 12 couple, via prism 26, into second optical waveguide 14. This is schematically indicated in Figs. 3 and 4; the new width of gaps 35 and 37 is indicated by d'. As a result of this coupling process, first input port $P_{in1}$ is now optically connected to second output port $P_{o2}$ (cross state), and optical signals launched into first input port $P_{in1}$ follow the direction indicated by arrows 47 and 49.

In order to reduce wavelength and polarization dependent losses and crosstalk in the cross state, a high coupling efficiency between first optical waveguide 12 and second optical waveguide 14 via prism 26 is desirable.

One possible measure is to fill first and second gap 35 and 37, with an index matching oil. Furthermore, the coupling efficiency of switch 10 can be improved by optimizing its geometric parameters. It can be shown that, for one wavelength and one polarization, the relation between the refractive index $n_p$ of prism 26, the effective refractive index $n_{eff}$ of the first and second optical waveguides 12 and 14 and the intersection angle $\alpha$ between first and second optical waveguides 12 and 14 should be chosen such that

$$n_p \sin (\alpha/2) = n_{eff}.$$

For example, if prism 26 is made of silica with a refractive index of $n_p \cong 3,5$ at wavelength $\lambda = 1,545$ nm, and if the effective refractive index $n_{eff}$ of the first and second optical waveguides 12 and 14 is approximately $n_{eff} = 1,445$ at this wavelength, intersection angle $\alpha$ between first and second optical waveguides 12 and 14 should be about 48,9°.

A simple perturbation model shows that the half width resonance acceptance angle $\Delta\Theta$ of optical waveguides 12 and 14 is related to the coupling length $l_c$ (i.e. minimum length of first and second indentations 42 and 44) by

$$1/l_c = k_0 \cdot n_p \cdot \cos (\alpha/2) \cdot \Delta\Theta, \qquad \text{with } k_0 = \lambda/\pi.$$

Exemplary simulations on the basis of the parameters as given above have shown that a coupling length of about 50 μm results in a strong coupling between first and second optical waveguides 12 and 14.

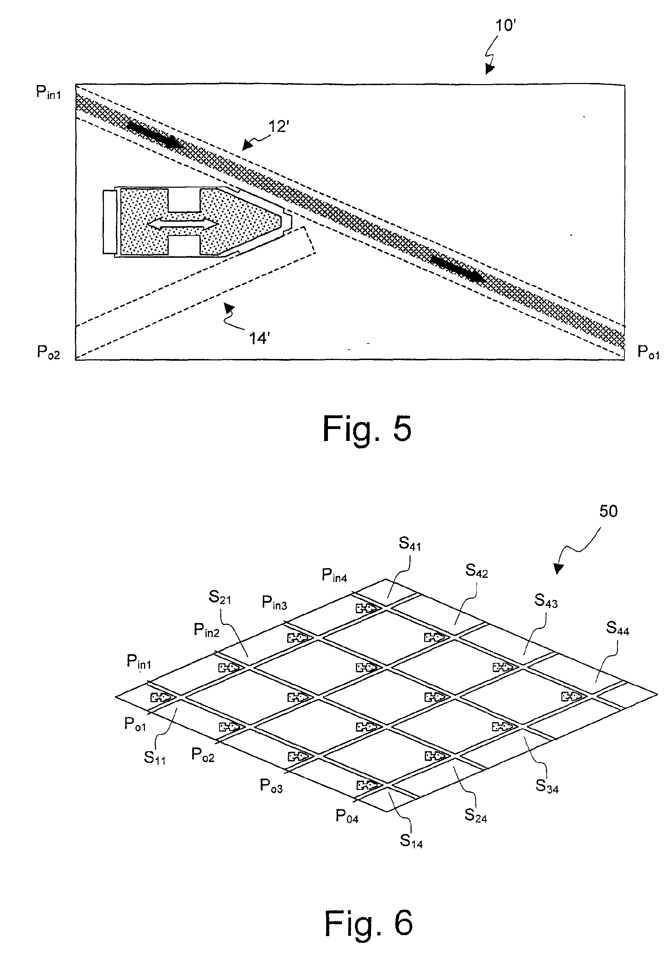

Fig. 5 shows an optical switch according to the invention in a 1x2 configuration. 1x2 switch 10' differs from switch 10 shown in Figs. 1 to 4 in that second optical waveguide 14' does not intersect first optical waveguide 12'. As a result, the insertion loss of switch 10' in the bar state shown in Fig. 5 is even smaller than the insertion loss of switch 10 that has intersecting waveguides. Such a 1x2 configuration is particularly advantageous in applications other than switch arrays. For example, switch 10' can be used as a component in an add-drop (de-)multiplexer if combined with an appropriate wavelength sensitive element. By carefully choosing design parameters as mentioned above, it is also possible to couple only a desired fraction of radiation of a specified wavelength from first optical waveguide 12' into second optical waveguide 14'.

Fig. 6 shows in a schematic representation a top view of a 4x4 switch array 50 comprising 16 switches $S_{ij}$, i, j = 1, 2, 3, 4, as have been described before with reference to Figs. 1 to 4. Switch array 50 comprises four input ports $P_{in1}$, , $P_{in2}$, $P_{in3}$ and $P_{in4}$ and four output ports $P_{o1}$, $P_{o2}$, $P_{o3}$ and $P_{o4}$.

As can easily be seen from this representation, all conceivable port-to-port connections require exactly one switch in the cross state and differ only with respect to the number of switches in the bar state through which optical signals have to travel from one of the input ports $P_{in1}$, $P_{in2}$, $P_{in3}$ and $P_{in4}$ to one of the output ports $P_{o1}$, $P_{o2}$, $P_{o3}$ and $P_{o4}$. For example, only switch $S_{11}$ is in the cross state for connecting input port $P_{in1}$ to output port $P_{o1}$; no other switches are involved. For establishing a connection between input port $P_{in2}$ to output port $P_{o1}$, switch $S_{21}$ is in the cross state, whereas switch $S_{11}$ is in the bar state. For connecting input port $P_{in4}$ and output port $P_{o4}$, switches $S_{41}$, $S_{42}$, $S_{43}$, $S_{34}$, $S_{24}$ and $S_{14}$ are in the bar state, and only switch $S_{44}$ is in the cross state.

Due to the very small insertion losses in the bar state of switches $S_{ij}$, all conceivable port-to-port connections have an almost uniform insertion loss that is mainly determined by the very low insertion loss of the exactly one switch being in the cross state.

**Claims**

1. Planar optical switch comprising:

   a) a first planar optical waveguide (12; 12') and

   b) a second planar optical waveguide (14; 14') that is arranged in the plane of and inclined to the first optical waveguide (12; 12'),

   **characterized by**

   c) a coupling element (26) made of a refractive material that

   i) is movably (32) arranged between a coupling position and a non-coupling position and

   ii) has a first (28) and a second (30) surface that, if the coupling element (26) is in the coupling position, face a lateral surface (46) of the first optical waveguide (12; 12') and a lateral surface (48) of the second optical waveguide (14; 14'), respectively, in such a way that a substantial fraction of radiation guided in the first optical waveguide (12; 12') is coupled via the coupling element (26) into the second optical waveguide (14; 14').

2. The optical switch of claim 1, **characterized in that** the first (12; 12') and the second (14; 14') optical waveguides are straight such that an angle $\alpha$ is formed between the waveguides (12; 14; 12', 14'), and that the coupling element is a prism (26), wherein the first (28) and the second (30) surface of the prism (26) are plane and define a prism angle $\gamma$ that substantially equals the angle $\alpha$.

3. The optical switch of claim 1, **characterized by** an actuator (34) realized as a microelectromechanical structure for moving the coupling element between the coupling position and the non-coupling position, the actuator being formed, together with the coupling element, as one monolithic block of micromachined material, particularly of silicon or silicon on insulator.

4. The optical switch of claim 1, **characterized in that** the first (28) and the second (30) surface is spaced apart from the lateral surfaces (46, 48) of the first (12; 12') and second (14; 14') optical waveguide, respectively, so as to form a gap (35, 37) of width d that is increased during movement of the coupling element (26) from the coupling position to the non-coupling position.

5. The optical switch of claim 4, **characterized in that** the gap (35, 37) is filled by an index matching liquid.

6. The optical switch of claim 1, **characterized in that** the movement of the coupling element (26) between the coupling and the non-coupling position is guided by at least one stop structure (36).

7. The optical switch of claim 1, **characterized in that** the first optical waveguide (12) intersects the second optical waveguide (14).

8. Optical switch array comprising at least one optical switch ($S_{ij}$) of claim 1.

# Fig. 1

# Fig. 2

Fig. 3

Fig. 4

10'

$P_{in1}$

12'

14'

$P_{o2}$                                                     $P_{o1}$

# Fig. 5

50

$S_{41}$

$P_{in4}$    $S_{42}$

$S_{21}$    $P_{in3}$    $S_{43}$

$P_{in2}$    $S_{44}$

$P_{in1}$

$P_{o1}$

$S_{11}$    $P_{o2}$    $S_{34}$

$P_{o3}$

$P_{04}$    $S_{24}$

$S_{14}$

# Fig. 6

**European Patent Office**

**EUROPEAN SEARCH REPORT**

Application Number

EP 02 36 0215

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | US 5 699 462 A (CHANG KOK-WAI ET AL) 16 December 1997 (1997-12-16) | 1,2,4-8 | G02B6/35 |
| Y | * figures 2,18,19 * | 3 | |
| Y | GB 2 365 988 A (KYMATA LTD ;ALCATEL OPTRONICS UK LTD (GB)) 27 February 2002 (2002-02-27) * abstract * | 3 | |
| A | EP 0 905 546 A (NIPPON TELEGRAPH & TELEPHONE) 31 March 1999 (1999-03-31) | | |
| A | US 6 400 855 B1 (LI BULANG ET AL) 4 June 2002 (2002-06-04) | | |
| A | US 5 353 363 A (KECK DONALD B ET AL) 4 October 1994 (1994-10-04) | | |

TECHNICAL FIELDS
SEARCHED (Int.Cl.7)

G02B

The present search report has been drawn up for all claims

| Place of search | Date of completion of the search | Examiner |
|---|---|---|
| THE HAGUE | 6 January 2003 | Verbandt, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 382 984 A1**

## ANNEX TO THE EUROPEAN SEARCH REPORT
## ON EUROPEAN PATENT APPLICATION NO.

EP 02 36 0215

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2003

| Patent document cited in search report | | Publication date | Patent family member(s) | | Publication date |
|---|---|---|---|---|---|
| US 5699462 | A | 16-12-1997 | EP<br>JP | 0813088 A1<br>10090735 A | 17-12-1997<br>10-04-1998 |
| GB 2365988 | A | 27-02-2002 | WO | 0216997 A1 | 28-02-2002 |
| EP 0905546 | A | 31-03-1999 | EP<br>JP<br>US | 0905546 A2<br>11160741 A<br>6122416 A | 31-03-1999<br>18-06-1999<br>19-09-2000 |
| US 6400855 | B1 | 04-06-2002 | NONE | | |
| US 5353363 | A | 04-10-1994 | NONE | | |

EPO FORM P0459

For more details about this annex : see Official Journal of the European Patent Office, No. 12/82